## Europäisches Patentamt
## European Patent Office
## Office européen des brevets

(19)

(11) Veröffentlichungsnummer: **0 257 173**
**B1**

(12)

# EUROPÄISCHE PATENTSCHRIFT

(45) Veröffentlichungstag der Patentschrift:
14.03.90

(21) Anmeldenummer: 86890229.7

(22) Anmeldetag: 12.08.86

(51) Int. Cl.⁴: **C21B 13/14**, C21C 5/28,
C21C 5/56

(54) **Hüttenwerk sowie Verfahren zum Betrieb eines solchen Hüttenwerkes.**

(43) Veröffentlichungstag der Anmeldung:
02.03.88 Patentblatt 88/9

(45) Bekanntmachung des Hinweises auf die Patenterteilung:
14.03.90 Patentblatt 90/11

(84) Benannte Vertragsstaaten:
AT BE DE FR GB IT LU NL SE

(56) Entgegenhaltungen:
EP-A- 0 126 391
EP-A- 0 179 014
EP-A- 0 179 734
DE-B- 1 074 607
DE-B- 1 184 363
US-A- 1 939 874

(73) Patentinhaber: VOEST-ALPINE
INDUSTRIEANLAGENBAU GESELLSCHAFT m b.H.,
Turmstrasse 44, A-4020 Linz(AT)

(72) Die Erfinder haben auf ihre Nennung verzichtet

(74) Vertreter: Wolfram, Gustav, Dipl.-Ing.,
Schwindgasse 7 P.O. Box 205, A-1041 Wien(AT)

ACTORUM AG

## Beschreibung

Die Erfindung betrifft ein Hüttenwerk zur Erzeugung von Stahl aus Erz und weiteren festen Eisenträgern, wie Schrott, sowie ein Verfahren zum Betrieb eines solchen Hüttenwerkes.

In konventionellen Hüttenwerken, die Stahl in Blasstahlkonvertern durch Auf- und/oder Einblasen von Sauerstoff auf oder in flüssiges Roheisen erzeugen, wird das Roheisen in Hochöfen unter Einsatz von Erzen und hochwertigem Koks hergestellt. Da die Roheisenerzeugung in großen Hochöfen am wirtschaftlichsten ist, geht die Entwicklung in Richtung von Hochöfen mit höchster Leistung, die über möglichst lange Zeiträume ohne Unterbrechung betrieben werden müssen. Bei Verwendung derartiger Hochöfen müssen stahlwerksseitig große Roheisenmengen abgenommen werden, d.h. es ist eine Mehrzahl von Blasstahlkonvertern mit ebenfalls hoher Leistung erforderlich, um das Roheisen aufzuarbeiten. Eine Speicherung des erzeugten flüssigen Roheisens ist nur bedingt möglich. Ein Vergießen von flüssigem Roheisen zu Masseln bei stahlwerksseitigen Unterbrechungen bzw. Betriebsstörungen ist unwirtschaftlich.

Neben flüssigem Roheisen werden im Konverterbetrieb auch feste Eisenträger, vorwiegend Schrott, als Einsatz verwendet. Ohne Zufuhr zusätzlicher Wärme, d.h. wenn der Frischprozeß autotherm laufen soll, kann Schrott nur in begrenztem Ausmaß eingesetzt werden. Abhängig von den Preisen für Schrott und Roheisen kann es von Interesse sein, den Schrottanteil im Einsatz zu variieren, um die Einsatzkosten niedrig zu halten.

Eine Möglichkeit zur Erzielung höherer Schrottsätze besteht darin, dem Einsatz zusätzliche Wärmeträger in Form fossiler Brennstoffe zuzuführen. Es ist bekannt, bei Konvertern, die nach dem Sauerstoffaufblasverfahren arbeiten, den Schrottsatz im Konverter dadurch zu erhöhen, daß der Schrott vor dem eigentlichen Frischprozeß mit einer Brennerlanze vorgewärmt wird. Ebenso ist es bekannt, bei bodenblasenden Konvertern Wärmeträger durch die Bodendüsen zuzuführen und das im Konverter gebildete kohlenmonoxidhältige Gas oberhalb des Einsatzes teilweise nachzuverbrennen, um den Schrottsatz zu vergrößern. Derartige Verfahren erfordern jedoch eine Verlängerung der Chargenzeiten und haben damit eine Verringerung der Produktivität zur Folge. Durch die Zufuhr von Brennstoffen werden auch unerwünschte Begleitelemente, wie Schwefel, in den Prozeß eingebracht. Außerdem entstehen hohe Abgasmengen, die einer prozeßfremden Verwertung zugeführt werden müssen.

Aus der EP-A1 - 0 167 895 ist ein Verfahren zum Herstellen von Stahl aus Schrott bekannt, bei dem das beim Frischen von Roheisen zu Stahl entstehende kohlenmonoxidreiche Abgas einem mit Schrott und Koks beschickten Kupolofen zugeführt und im Bereich der Winddüsen des Kupolofens in exothermer Reaktion verbrannt wird. Der Schrott wird aufgeschmolzen und aufgekohlt und das auf diese Weise erzeugte Roheisen dem Frischgefäß zugeführt, wo es ohne weitere Wärmezufuhr zu Stahl gefrischt wird. Bei diesem Verfahren ist zwar der Energieaufwand relativ gering, doch ist es bezüglich der Wahl des Verhältnisses von Roheisen zu Schrott nicht flexibel, da es ausschließlich von Schrott als Grundmaterial ausgeht. Außerdem ist der Schrottpreis in Abhängigkeit von der jeweiligen Wirtschaftslage starken Schwankungen ausgesetzt.

Die Erfindung bezweckt die Vermeidung der geschilderten Nachteile und Schwierigkeiten und stellt sich die Aufgabe, ein Hüttenwerk zur Verfügung zu stellen sowie ein Verfahren zu dessen Betrieb, mit welchem die Erzeugung von Stahl hoher Reinheit aus stückigem Erz und anderen Eisenträgern möglich ist, wobei in wirtschaftlicher Weise und ohne hohe Investitionskosten flüssiges Roheisen zur Verfügung gestellt wird; zusätzlich feste Eisenträger eingesetzt werden können, deren Menge in weiten Grenzen variierbar ist, alle Aggregate in ihrer Leistung flexibel aneinander angepaßt werden können und auch die anfallenden Abgase optimal verwertbar sind.

Diese Aufgabe der Erfindung wird gelöst durch die Kombination einer Direktreduktionsanlage, insbesondere eines Direktreduktionsschachtofens, zur Erzeugung von Eisenschwamm mit einem Einschmelzvergaser, einem oder mehreren Blasstahlkonvertern und einem Kupolofen, wobei die Direktreduktionsanlage austragsseitig über Transporteinrichtungen für Eisenschwamm sowohl mit dem Einschmelzvergaser als auch mit den Konvertern, der Kupolofen über Transporteinrichtungen für flüssiges Vormetall mit den Konvertern und der Einschmelzvergaser über Transporteinrichtungen für flüssiges Roheisen mit den Konvertern in Verbindung stehen.

Vorzugsweise sind Puffergefäße für Roheisen aus dem Einschmelzvergaser und für Vormetall aus dem Kupolofen vorgesehen.

Nach einer besonderen Ausführungsform sind die Abgasleitungen der Direktreduktionsanlage und des Einschmelzvergasers sowie die Abgasleitung der Blasstahlkonverter leitungsmäßig verbunden.

Das erfindungsgemäße Verfahren zum Betrieb des Hüttenwerkes besteht darin,

- daß stückige oxidische Eisenträger in die Reduktionszone der Direktreduktionsanlage eingebracht und durch im Einschmelzvergaser aus Kohle und sauerstoffhältigem Gas erzeugtes Reduktionsgas reduziert werden,
- das reduzierte Produkt - Eisenschwamm - zum Teil in heißem Zustand in die Einschmelzzone des Einschmelzvergasers eingebracht, dort erhitzt, verflüssigt und aufgekohlt wird, wobei flüssiges Roheisen entsteht,
- zu einem anderen Teil aus der Direktreduktionsanlage ausgeschleust und als Festeinsatz in den (die) Blasstahlkonverter eingesetzt wird,
- Schrott gemeinsam mit Koks in den Kupolofen eingesetzt und zu Vormetall verflüssigt wird,
- flüssiges Roheisen aus dem Einschmelzvergaser zusammen mit Vormetall aus dem Kupolofen in den (die) Blasstahlkonverter chargiert und gefrischt wird, wobei
- als Brennstoffe zum Betrieb des Kupolofens Abgas aus der Direktreduktionsanlage, Gas aus dem Einschmelzvergaser und Abgas aus den Blasstahlkonvertern bzw. ein Gemisch dieser Gase verwendet werden.

Gegenüber konventionellen Hüttenwerken mit Verwendung eines Hochofens als Roheisenerzeuger hat die erfindungsgemäße Anlage den Vorteil, daß sie problemlos an- und abgefahren werden kann und daß hinsichtlich der für die Stahlerzeugung verwendeten Einsatzstoffe Variationsmöglichkeiten in weiten Grenzen gegeben sind.

Die Erfindung ist in dem beiliegenden Blockschema näher erläutert.

Mit 1 ist eine Direktreduktionsanlage, vorzugsweise ein Reduktionsschachtofen, bezeichnet, der mit stückigem Erz aus der Chargiervorrichtung 2 chargiert wird. Der Schachtofen ist mit einem Einschmelzvergaser 3 verbunden, in welchem aus Kohle und sauerstoffhältigem Gas ein Reduktionsgas erzeugt wird, welches über eine Leitung 4 dem Reduktionsschachtofen zugeführt wird.

Im Schachtofen wird das stückige Erz zu Eisenschwamm 5 reduziert. Der Eisenschwamm wird zum Teil dem Einschmelzvergaser zugeführt und in der Einschmelzzone zu Roheisen 6 aufgeschmolzen. Das geschmolzene Roheisen wird in einem Puffergefäß 7, beispielsweise einer Rohrpfanne, gesammelt.

Zur erfindungsgemäßen Anlage gehört der Blasstahlkonverter 8, der in diesem Beispiel als Sauerstoffaufblaskonverter ausgeführt ist und mit einer von oben in den Konverter geführten Sauerstofflanze 9 betrieben wird. Der Konverter wird mit flüssigem Roheisen aus dem Puffergefäß 7 beschickt, beispielsweise mit Hilfe von Transportpfannen, die mit 10 bezeichnet sind. Ein Teil des Konvertereinsatzes ist Eisenschwamm, der mit Hilfe einer Fördereinrichtung 11 aus dem Schachtofen abgezweigt wird.

Im Kupolofen 13 werden feste Eisenträger 14, vorwiegend Schrott, zusammen mit Kohlenstoffträgern 15 niedergeschmolzen und verflüssigt. Die dazu notwendige Wärme wird aus Reduktionsgas (Leitung 16), Topgas (Leitung 17), aus dem Konverterabgas oder einer Mischung dieser Gase gewonnen. Das Konverterabgas kann durch die Leitung 18 abgezogen und in einem Gasspeicher 19 gesammelt werden.

Das im Kupolofen 13 gewonnene flüssige Vormetall 20 wird in einem Puffergefäß 21 gesammelt und dem Blasstahlkonverter 8 durch Transportpfannen 12 zugeführt.

Es wäre auch möglich, anstelle der beiden Puffergefäße 7 und 21 nur ein einziges zu verwenden, wobei ein Mischmetalleinsatz aus dem Roheisen des Einschmelzvergasers und dem Vormetall des Kupolofens erhalten wird.

Ein typisches Ausführungsbeispiel für das erfindungsgemäße Verfahren bei Verwendung eines 40 t-Aufblaskonverters ist das folgende:

Aus 62,9 t Erz/h mit einer Zusammensetzung von 93,17 % $Fe_2O_3$, 0,02 % S, 0,14 % $CO_2$, 1,03 % CaO, 0,07 % MnO, 2,84 % $SiO_2$, 0,08 % MgO, 0,67 % $Al_2O_3$, 0,03 % $P_2O_5$ und 0,80 % Restanteile werden in einem Direktreduktionsschachtofen unter Verwendung von Reduktionsgas mit einer Zusammensetzung von 68,14 % CO, 1,86 % $CO_2$, 0,03 % $CH_4$, 27,7 % $H_2$, 1,68 % $H_2O$, 0,35 % $N_2$ und 0,24 % $H_2S$ 45,5 t/h Eisenschwamm mit einer Zusammensetzung von 89,0 % Fe, 1,0 % CaO, 3,9 % $SiO_2$, 0,1 % MnO, 1,0 % $Al_2O_3$, 0,04 % P, 0,08 % S und 4,0 % Gesamtkohlenstoff (1,5 % $Fe_3C$, 2,5 % elementarer Kohlenstoff) erzeugt.

Ein Teil davon, nämlich 29,3 t/h werden dem Einschmelzvergaser unter Zufuhr von 36,1 t Kohle und 23251 Nm³/h Sauerstoff und 16,2 t/h Eisenschwamm werden dem Konverter zugeführt. Im Einschmelzvergaser wird Roheisen in einer Menge von 27,8 t/h mit einer Zusammensetzung von 4,1 % C, 1,0 % Si, 0,07 % Mn, 0,05 % P und 0,03 % S erhalten, welches im Puffergefäß 7 gespeichert und chargenweise dem Konverter zugeführt wird.

Im Kupolofen werden aus 29,3 t Schrott mit einer Zusammensetzung von 0,15 % C, 0,20 % Si, 0,3 % Mn, weniger als 0,02 % P, weniger als 0,02 % S, Rest Eisen und aus 1,3 t/h Koks 27,8 t/h Vormetall mit einer Zusammensetzung von 3,6 % C, 0,1 % Si, 0,2 % Mn, 0,02 % P, 0,05 % S, Rest Eisen bei einer Temperatur von 1400°C erschmolzen. Dieses Vormetall wird im Puffergefäß 21 gespeichert und sodann chargenweise dem Konverter zugeführt. Der Konverter hat eine Leistung von 63,3 t/h, der gefrischte Stahl eine Zusammensetzung von 0,04 % C, 0,1 % Mn, weniger als 0,02 % P, weniger als 0,025 % S und eine Temperatur von 1650°C.

Zum Erschmelzen des Vormetalles im Kupolofen wird bei diesem Beispiel Topgas aus dem Direktreduktionsschachtofen verwendet, u.zw. werden 13070 Nm³/h des mit einem Druck von 4,4 bar anstehenden Gases benötigt. Die überschüssige Menge an Topgas, welches in etwa vierfacher Menge anfällt, als zum Betrieb des Kupolofens notwendig ist, kann anderen Verbrauchern zugeführt werden.

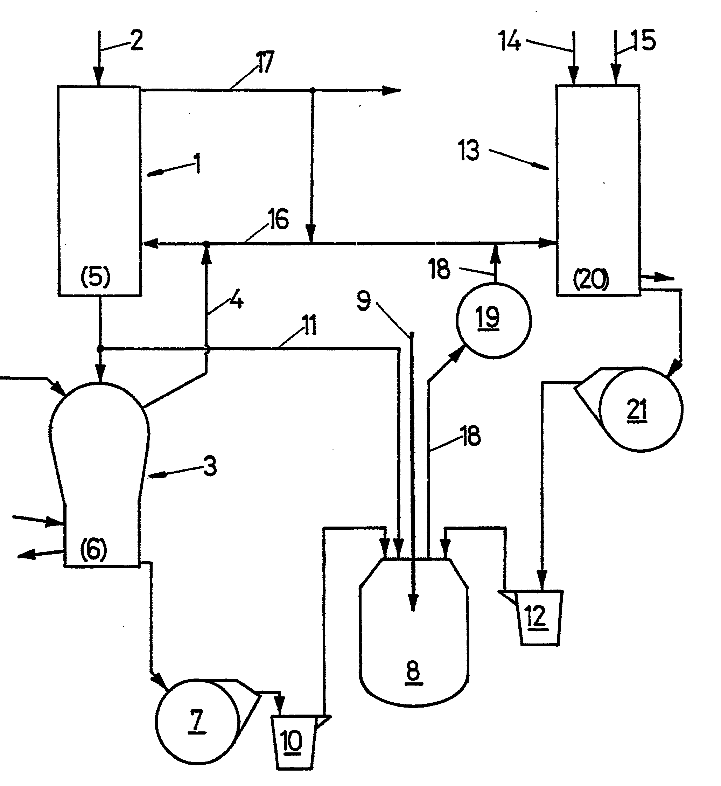

**Patentansprüche**

1. Hüttenwerk zur Erzeugung von Stahl aus Erz und weiteren festen Eisenträgern, wie Schrott, gekennzeichnet durch die Kombination einer Direktreduktionsanlage (1), insbesondere eines Direktreduktionsschachtofens, zur Erzeugung von Eisenschwamm (5) mit einem Einschmelzvergaser (3), einem oder mehreren Blasstahlkonvertern (8) und einem Kupolofen (13), wobei die Direktreduktionsanlage (1) austragsseitig über Transporteinrichtungen (11) für Eisenschwamm (5) sowohl mit dem Einschmelzvergaser (3) als auch mit den Konvertern (8), der Kupolofen (13) über Transporteinrichtungen (12) für flüssiges Vormetall (20) mit den Konvertern (8) und der Einschmelzvergaser (3) über Transporteinrichtungen (10) für flüssiges Roheisen mit den Konvertern (8) in Verbindung stehen.

2. Hüttenwerk nach Anspruch 1, dadurch gekennzeichnet, daß Puffergefäße (7, 21) für Roheisen (6) aus dem Einschmelzvergaser (3) und für Vormetall (20) aus dem Kupolofen (13) vorgesehen sind.

3. Hüttenwerk nach Anspruch 1 oder 2, dadurch gekennzeichnet, daß die Abgasleitungen (16, 17) der Direktreduktionsanlage (1) und des Einschmelzvergasers (3) sowie die Abgasleitung (18) der Blasstahlkonverter (8) leitungsmäßig verbunden sind.

4. Verfahren zum Betrieb eines Hüttenwerkes nach den Ansprüchen 1 bis 3, dadurch gekennzeichnet,
- daß stückige oxidische Eisenträger in die Reduktionszone der Direktreduktionsanlage (1) eingebracht und durch im Einschmelzvergaser (3) aus Kohle und sauerstoffhältigem Gas erzeugtes Reduktionsgas reduziert werden,
- das reduzierte Produkt - Eisenschwamm (5) - zum Teil in heißem Zustand in die Einschmelzzone des Einschmelzvergasers (3) eingebracht, dort erhitzt, verflüssigt und aufgekohlt wird, wobei flüssiges Roheisen (6) entsteht,
- zu einem anderen Teil aus der Direktreduktionsanlage (1) ausgeschleust und als Festeinsatz in den (die) Blasstahlkonverter (8) eingesetzt wird,
- Schrott (14) gemeinsam mit Koks (15) in den Kupolofen (13) eingesetzt und zu Vormetall (20) verflüssigt wird,
- flüssiges Roheisen (6) aus dem Einschmelzvergaser (3) zusammen mit Vormetall (20) aus dem Kupolofen (13) in den (die) Blasstahlkonverter (8) chargiert und gefrischt wird, wobei
- als Brennstoffe zum Betrieb des Kupolofens (13) Abgas aus der Direktreduktionsanlage (1), Gas aus dem Einschmelzvergaser (3) und Abgas aus den Blasstahlkonvertern (8) bzw. ein Gemisch dieser Gase verwendet werden.

**Claims**

1. Mill arrangement for producing steel from ore and other solid iron carriers, such as scrap, characterised by the combination of a direct reduction plant (1), in particular a direct reduction shaft furnace, adapted to produce sponge iron (5) with a meltdown gasifier (3), one ore more steel blowing converters (8) and a cupola furnace (13), wherein the direct reduction plant (1), on its discharge side, is connected via transporting means (11) for sponge iron (5) both with the meltdown gasifier (3) and the converters (8), the cupola furnace (13), via transporting means (12) for liquid pre-metal (20), is in connection with the converters (8) and the meltdown gasifier (3), via transporting means (10) for molten pig iron, is in connection with the converters (8).

2. Mill arrangement according to claim 1, characterised in that temporary vessels (7, 21) for pig iron (6) from the meltdown gasifier (3) and for pre-metal (20) from the cupola furnace (13) are provided.

3. Mill arrangement according to claim 1 or 2, characterised in that the offgas ducts (16, 17) of the direct reduction plant (1) and of the meltdown gasifier (3) as well as the offgas ducts (18) of the steel blowing converters (8) communicate in duct-like manner.

4. Process of operating a mill arrangement according to claims 1 to 3, characterised in that
- lumpy oxidic ferrous carriers are introduced in-to the reducing zone of the direct reduction plant (1) and are reduced by reduction gas produced in the meltdown gasifier (3) from coal and oxygen-containing gas,

- the reduced product - sponge iron (5) - is partly introduced in the hot state into the melting zone of the meltdown gasifier (3), is heated there, liquefied and carburised, so as to form molten pig iron (6),
- for the other part is extracted from the direct reduction plant (1) and is charged as a solid charge into the steel blowing converter(s) (8),
- scrap (14) together with coke (15) is charged in-to the cupola furnace (13) and liquefied to form pre-metal (20),
- molten pig iron (6) from the meltdown gasifier (3) together with pre-metal (20) from the cupola furnace (13) is charged into the steel blowing converter(s) (8) and is refined, wherein
- offgas from the direct reduction plant (1), gas from the meltdown gasifier (3) and offgas from the steel blowing converters (8) or mixture of these gases are used as fuel for operating the cupola furnace (13).

**Revendications**

1. Usine sidérurgique pour produire de l'acier à partir de minerai et d'autres produits ferreux solides, comme des riblons, caractérisée par la combinaison d'une installation de réduction directe (1), en particulier d'un four à cuve de réduction directe, pour produire de l'éponge de fer (5), avec un gazéificateur à zone de fusion (3), un ou plusieurs convertisseurs d'acier par soufflage de l'oxygène (8) et un cubilot (13), étant précisé que l'installation de réduction directe (1) est reliée, du côté de sa sortie, au moyen de dispositifs de transport (11) pour l'éponge de fer (5), aussi bien avec le gazéificateur à zone de fusion (3) qu'avec les convertisseurs (8), que le cubilot (13) est relié, au moyen de dispositifs de transport (12) pour le métal préaffiné liquide (20) avec les convertisseurs (8) et que le gazéificateur à zone de fusion (3) est relié, au moyen de disposi-rifs, de transport (10) pour la fonte liquide, avec le convertisseur (8).

2. Usine sidérurgique selon la revendication 1, caractérisée en ce que des récipients tampons (7, 21) sont prévus pour la fonte (6) sortant du gazéificateur à zone de fusion (3) et pour le métal préaffiné (20) sortant du cubilot (13).

3. Usine sidérurgique selon la revendication 1 ou 2, caractérisée en ce que les conduites (16, 17) des gaz d'échappement de l'installation de réduction directe (1) et du gazéificateur à zone de fusion (3) ainsi que la conduite (18) de gaz d'échappement du convertisseur d'acier par soufflage d'oxygène (18) sont reliées entre elles.

4. Procédé d'exploitation d'une usine sidérurgique conforme aux revendications 1 à 3, caractérisé en ce que:
- on amène le produit ferreux oxydant en morceaux dans la zone de réduction de l'installation de réduction directe (1) et on le réduit au moyen du gaz de réduction produit danz le gazéificateur à zone de fusion (3) à partir du charbon et du gaz contenant de l'oxygène.
- on amène le produit réduit - éponge de fer (5) - en partie à l'état chaud dans la zone de fusion du gazéificateur à zone de fusion (3), on l'y chauffe, on l'y, met en fusion et on l'y carbure, ce qui donne de la fonte liquide (6),

– on écluse une autre partie hors de l'installation de réduction directe (31) et on le charge, en tant que charge solide, dans le (les) convertisseurs d'acier par soufflage d'oxygène (8),

– on charge les riblons (14), en même temps que du coke (15) dans le cubilot (13) et on les met en fusion pour donner du métal préaffiné (20),

– on charge dans le (les) convertisseurs d'acier par soufflage d'oxygène (8) la fonte liquide (6) provenant du gazéificateur à zone de fusion (3) en même temps que le métal préaffiné (20) provenant du cubilot (13) et on les y affine, étant précisé que,

– comme combustibles pour l'exploitation du cubilot (13), on emploie les gaz d'échappement provenant de l'installation de réduction directe (1), les gaz provenant du gazéificateur à zone de fusion (3) et les gaz d'échappement provenant des convertisseurs d'acier par soufflage d'oxygène (8) ou un mélange de ces gaz.

EP 0 257 173 B1